# EUROPÄISCHE PATENTSCHRIFT

(11) **EP 3 445 948 B1**
(45) Veröffentlichungstag und Bekanntmachung des Hinweises auf die Patenterteilung: **30.12.2020**
(21) Anmeldenummer: 17726914.9
(22) Anmeldetag: 26.05.2017
(51) Int. Cl.: F01D 11/00, F16J 15/3288

(54) **DAMPFTURBINE**
STEAM TURBINE
TURBINE À VAPEUR

(30) Priorität: 23.06.2016 DE 102016211280
(43) Veröffentlichungstag der Anmeldung: 27.02.2019
(73) Patentinhaber: Siemens Aktiengesellschaft, 80333 München (DE)
(72) Erfinder: BLESSING, Alexander, 01157 Dresden (DE); SPORBERT, Christoph, 02826 Görlitz (DE); STRAUCH, Matthias, 09573 Leubsdorf (DE)
(86) Internationale Anmeldenummer: PCT/EP2017/062729
(87) Internationale Veröffentlichungsnummer: WO 2017/220282

(56) Entgegenhaltungen:
- WO-A1-99/42704
- DE-A1-102014 115 963
- US-A1- 2015 159 497
- US-A1- 2015 184 529

## Beschreibung

Die vorliegende Erfindung betrifft eine Dampfturbine, insbesondere eine Dampfturbine mit einer Düsengruppenregelung.

US 2015/0159497 A1 offenbart eine Dampfturbine und eine Flussanordnung, welche mit der Dampfturbine gekoppelt ist. Die Dampfturbine umfasst einen Hoch-Druck-Abschnitt, welcher eine Mehrzahl von Stufen umfasst. Dabei umfasst jede Stufe eine rotierende Anordnung und eine stationäre Anordnung.

DE 10 2014 115 963 A1 offenbart Turbine, zu der ein Rotor mit einem ersten Schaufelfuß und ein Statorglied gehören, das aufweist: eine Rotorbohrung, in der wenigstens ein Abschnitt des Rotors angeordnet ist; ein Stirnende, das benachbart zu dem ersten Schaufelfuß des Rotors angeordnet ist; mehrere Dichtungen in der Rotorbohrung, die dazu dienen, gegen den Rotor abzudichten, wobei die mehreren Dichtungen eine erste Dichtung, die dem Stirnende am nächsten ist, und eine zweite Dichtung beinhalten, die benachbart zu der ersten Dichtung angeordnet ist; und mehrere Durchlasskanäle, wobei sich jeder ausgehend von einer Oberfläche der Rotorbohrung an einer Stelle zwischen der ersten Dichtung und der zweiten Dichtung erstreckt und sich durch das Stirnende erstreckt.

In einer Dampfturbine wird die thermische Energie des Dampfes in mechanische Arbeit umgewandelt. Die Dampfturbine weist hierzu wenigstens einen hochdruckseitigen Dampfeinlass und wenigstens einen niederdruckseitigen Dampfauslass auf. Auf dem Weg zwischen Dampfeinlass und Dampfauslass verringert sich die Energie des Dampfes, was mit einer Abnahme der Dampftemperatur und des Dampfdruckes einhergeht.

Um einen hohen Wirkungsgrad zu erzielen, ist ein möglichst großes Enthalpiegefälle zwischen dem zugeführten Dampf und dem Dampf am Auslass der Dampfturbine anzustreben. Hierzu ist eine möglichst hohe Temperatur des zugeführten Dampfes notwendig.

Durch die Turbine erstreckt sich eine Turbinenwelle, die mit Hilfe von Turbinenschaufeln angetrieben wird. Die Kopplung der Turbinenwelle mit einem elektrischen Generator oder einer Arbeitsmaschine ermöglicht die Erzeugung von elektrischer Energie bzw. mechanischer Antriebsleistung.

Zum Antreiben der Turbinenwelle sind Lauf- und Leitschaufeln vorgesehen, wobei die Laufschaufeln an der Turbinenwelle befestigt sind und mit dieser rotieren. Die Leitschaufeln sind feststehend an einem Turbinengehäuse oder einem Leitschaufelträger angeordnet.

Bei Dampfturbinen mit Düsengruppenregelung wird die vom zugeführten Dampf zuerst durchströmte Stufe üblicherweise in Gleichdruckbauweise ausgeführt. Die Leitschaufeln bzw. Düsen dieser Regelstufe sind in einem Einströmgehäuse fixiert. Die Laufschaufelreihe der Regelstufe ist auf einer Radscheibe befestigt und wird als A-Rad bezeichnet. Der von Einströmgehäuse und Radscheibe gebildete Axialspalt wird als Radzwischenraum und der zwischen Radscheibe und den nachfolgend durchströmten Trommelstufen liegende Bauraum als Radraum bezeichnet. Diese Ausführungsform der Regelstufe ist u.a. aus der Patentschrift DE 1 219 497 bekannt.

Das Einströmgehäuse kann mit (Innengehäuse) oder ohne (Düsengehäuse) integriertem Leitschaufelträger ausgeführt sein.

Nach bisherigem Stand der Technik strömt ein Teil der aus den Düsen austretenden Dampfmenge als Leckdampf in den Radzwischenraum und von dort weiter in den Ringspalt zwischen Einströmgehäuse und Welle.

Aufgrund der hohen Temperatur des Leckdampfs und der an der Turbinenwelle angreifenden Fliehkräfte ist der Rotor im Bereich des Radzwischenraums und des Ringspalts besonders hohen thermischen und mechanischen Beanspruchungen ausgesetzt. Rotor und Einströmgehäuse müssen in diesem Bereich so bemessen sein, dass sie der strukturellen Belastung bei geforderter Einsatztemperatur über die gesamte Lebensdauer standhalten, was den Einsatz hochfester und damit kostenintensiver Werkstoffe bedingen kann.

Weiterhin steht die Leckdampfmenge für die Energieumwandlung im A-Rad und ggf. weiteren Stufen nicht mehr zur Verfügung. Zur Reduzierung der Dampfleckage wird daher üblicherweise eine berührungsfreie Wellendichtung (z.B. Labyrinthdichtung) in den Ringspalt eingesetzt. Die Effektivität derartiger Wellendichtungen wird u.a. durch die Dampftemperatur begrenzt, da bei der Bemessung der Spalte u.a. thermisch bedingte plastische Verformungen der Welle (sog. Kriechdehnungen) vorgehalten werden müssen.

Somit gibt es gemäß dem Stand der Technik ein Problem hinsichtlich der Festigkeit und Lebensdauer des Rotors im Bereich der Wellendichtung und hinsichtlich der Dampfleckagen, die der Energieumwandlung in den nachfolgenden Stufen nicht mehr zur Verfügung stehen.

Eine Aufgabe der vorliegenden Erfindung ist es somit, eine Dampfturbine vorzuschlagen, welche die Temperatur des Rotors im Bereich der Radscheibe und der angrenzenden Wellendichtung vermindert, um somit insbesondere die Lebensdauer des Rotors zu erhöhen, und welche ferner eine höhere Effektivität der Wellendichtung, insbesondere geringere Leckageverluste, bereitstellt.

Die Aufgabe wird durch eine Dampfturbine gemäß dem unabhängigen Anspruch gelöst. Die abhängigen Ansprüche spezifizieren vorteilhafte Ausführungsformen der vorliegenden Erfindung.

Aus dem deutschen Gebrauchsmuster 1 883 030 ist eine Einrichtung zur Kühlung einer Dampfturbine bekannt, wobei Kühldampf aus der Radkammer entnommen und über eine Rohrleitung der Wellendichtung zugeführt wird. Diese Bauart hat neben der aufwendigen Konstruktionsweise den Nachteil, dass die Radscheibe und der angrenzende Wellenabschnitt im Bereich des Ringspalts nicht gekühlt werden.

Gemäß einer Ausführungsform der vorliegenden Erfindung ist eine Dampfturbine gemäß Anspruch 1 bereitgestellt, welche aufweist: ein Einströmgehäuse; in dem Einströmgehäuse fixierte Düsen; eine Radscheibe mit A-Rad-Schaufeln, wobei ein Radzwischenraum zwischen dem Einströmgehäuseabschnitt und der Radscheibe gebildet ist; eine in dem Radzwischenraum angeordnete Spaltdichtung, die an dem Einströmgehäuse und/oder an dem Rotor angebracht ist.

Dampf hoher Temperatur kann in einen Raum eingeleitet werden, welcher sich vor einem Düseneintritt befindet. Vor den Düsen können insbesondere Regelventile angeordnet sein, die eine Einstellung eines Volumenstromes von Dampf durch die Düsen erlauben. In den Düsen wird der Dampf beschleunigt und zwecks Umwandlung der kinetischen Energie in Rotationsenergie geeignet auf stromabwärts angeordnete A-Rad-Schaufeln geleitet. Dazu können die Düsen wie auch die Radschaufeln besonders ausgebildete Profile aufweisen.

Gemäß dieser Ausführungsform der vorliegenden Erfindung ist in dem Radzwischenraum eine Spaltdichtung angeordnet, die das Einströmen des aus der Düse austretenden Dampfes in die nachfolgende Wellendichtung verhindert. Die Spaltdichtung ist als eine Bürstendichtung ausgebildet. Die Spaltdichtung ist aus einem Material gefertigt, welches einer derartigen Dampftemperatur widersteht.

Insbesondere können zwischen dem Einströmgehäuse und der Radscheibe radial oder axial angeordnete Bürstendichtungen eingesetzt sein. Die Dichtelemente können auf einer abgesetzten Radscheibe angeordnet werden.

Zur Verbindung der Dampfräume vor der Wellendichtung und dem Radraum kann die Radscheibe mit axialen Bohrungen versehen sein oder ein Kanal kann im Einströmgehäuse verlegt sein.

Durch die Spaltdichtung können Leckageverluste von Dampf, welcher stromabwärts der Düsenschaufeln in herkömmlichen Dampfturbinen in den Radzwischenraum und Ringspalt gelangen kann, vermindert werden. Ferner kann die Dampftemperatur in dem Bereich der Wellendichtung annähend auf die Temperatur des Dampfes nach der Regelstufe herabgesetzt werden und damit niedriger sein als in herkömmlichen Dampfturbinen. Dadurch kann die thermische Belastung des Rotors als auch des Stators wesentlich reduziert werden, was eine Erhöhung der Druckdifferenzen und der Drehzahl ermöglichen kann.

Gemäß einer Ausführungsform der vorliegenden Erfindung verschließt die Spaltdichtung den Spalt in dem Abschnitt gegen Durchtritt von Dampf, der aus einem Bereich stromabwärts der Düsenschaufeln und stromaufwärts der Radschaufeln herrührt, teilweise. Damit können Leckageverluste reduziert werden, wodurch die Effektivität der Dampfturbine gesteigert werden kann.

Gemäß der vorliegenden Erfindung ist die Spaltdichtung als eine bauraumsparende Bürstendichtung ausgebildet.

Gemäß einer Ausführungsform der vorliegenden Erfindung weist die Bürstendichtung radial und/oder axial ausgerichtete Bürsten auf, welche mit einer der Fassung der Bürstendichtung gegenüberliegenden Oberfläche der Radscheibe in Kontakt stehen.

Je nach Position der Bürstendichtung innerhalb des Spaltes und je nach Geometrie des Spaltes können die Bürsten entweder axial, radial oder in einer Richtung, die zwischen axial und radial liegt, ausgerichtet sein.

Gemäß der vorliegenden Erfindung weist die Dampfturbine ferner zumindest eine (insbesondere mehrere, in Umfangsrichtung beabstandete) im Wesentlichen axial verlaufende Durchgangsöffnung in der Radscheibe auf, welche radial zwischen der Wellendichtung und der Spaltdichtung angeordnet ist. Die Durchgangsöffnung kann eine Zuführung von Dampf niedrigerer Temperatur zu einer Wellendichtung hin ermöglichen, wie weiter unten im Detail beschrieben wird.

Gemäß einer Ausführungsform der vorliegenden Erfindung ist die Durchgangsöffnung angeordnet, um eine Dampfströmung aus der Radkammer in den Spalt zu ermöglichen.

In der Radkammer ist die Temperatur des Dampfes in der Regel geringer als die Temperatur des Dampfes stromabwärts der Düse. Dampf aus der Radkammer kann somit vorteilhaft zum Kühlen von gewissen Komponenten der Dampfturbine verwendet werden, insbesondere zum Kühlen eines Rotorabschnitts, der zwischen dem Rotor und dem Einströmgehäuseabschnitt angeordnet sein kann.

Gemäß einer Ausführungsform der vorliegenden Erfindung ist die Durchgangsöffnung als axial verlaufende Bohrung durch die Radscheibe ausgeführt. Damit kann die Durchgangsöffnung auf einfache Weise realisiert werden. Die Durchgangsöffnung kann als axial verlaufende Öffnung, insbesondere Bohrung, durch die Radscheibe oder als eine Öffnung oder ein Durchbruch geneigt um einen Winkel gegen die axiale Richtung durch die Radscheibe oder als erodierte Öffnung durch die Radscheibe ausgeführt sein.

Gemäß einer Ausführungsform der vorliegenden Erfindung weist die Dampfturbine ferner eine erste Trommel mit einer Mehrzahl von Stufen auf.

Gemäß einer Ausführungsform der vorliegenden Erfindung weist die Dampfturbine ferner auf: zumindest eine zweite Trommel mit einer Mehrzahl von Stufen; eine Wellendichtung, die insbesondere eine in axialer Richtung verlaufende Labyrinthdichtung umfasst und zwischen dem Rotor und dem Einströmgehäuse angeordnet ist, wobei die zweite Trommel von Dampf gespeist wird, der aus der ersten Trommel austritt und über eine Dampfführung in einen Dampfeintrittsraum zur zweiten Trommel zurückgeführt wird, wobei die zweite Trommel von dem Dampf in, verglichen mit der Richtung, in der die erste Trommel von dem Dampf durchströmt wird, umgekehrter Richtung durchströmt wird, wobei der Dampfeintrittsraum zur zweiten Trommel über die Wellendichtung von dem Spalt getrennt ist.

Die Labyrinthdichtung kann teilweise an dem Rotor und teilweise an dem Einströmgehäuse angebracht sein. In dem Dampfeintrittsraum zur zweiten Trommel können ähnliche oder sogar gleiche Druckverhältnisse und Temperaturverhältnisse vorliegen wie an einem Austrittsbereich stromabwärts der ersten Trommel der Dampfturbine.

Gemäß einer Ausführungsform der vorliegenden Erfindung ist die Spaltdichtung zwischen der Radscheibe und dem Einströmgehäuse radial weiter von der Rotorachse entfernt angeordnet als die Wellendichtung und ist insbesondere ausgebildet, einen Strom von Dampf von dem Raumbereich stromabwärts der Düsenschaufeln und stromaufwärts der Radschaufeln durch den Spalt hindurch und zu der Wellendichtung hin zu vermindern.

Ferner kann ein Austrittsbereich der Durchgangsöffnung in der Radscheibe in den Spalt hinein näher an einer Rotationsachse liegen als die Spaltdichtung. Somit kann Dampf aus dem Radraum durch die Durchgangsöffnung hindurch zu der Wellendichtung zum Kühlen der Wellendichtung geführt werden. In dem Abschnitt des Spaltes zwischen einem Raumbereich stromabwärts der Düsenschaufeln bis zu der Spaltdichtung kann der Verlustdampfstrom, welcher stromabwärts der Düsenschaufeln in den Spalt gelangt, an einem weiteren Vordringen zu der Wellendichtung hin (durch einen weiteren Abschnitt des Spaltes) aufgrund der Spaltdichtung gehindert werden.

Gemäß einer Ausführungsform der vorliegenden Erfindung weist die Dampfturbine ferner ein Regelsystem zum Regeln einer Dampfmenge, die in die Dampfturbine einströmt, auf.

Ausführungsformen der vorliegenden Erfindung werden nun mit Bezug auf die beiliegenden Zeichnungen erläutert. Die Erfindung ist nicht auf die illustrierten oder beschriebenen Ausführungsformen beschränkt. Insbesondere kann die Trommel des Einströmgehäuses in gleicher Richtung durchströmt werden wie die nachfolgende Trommel.
Figur 1 illustriert in einer schematischen Längsschnittansicht eine Dampfturbine gemäß einer Ausführungsform der vorliegenden Erfindung;
Figur 2 illustriert in einer schematischen Längsschnittansicht eine Dampfturbine gemäß einer anderen Ausführungsform der vorliegenden Erfindung.

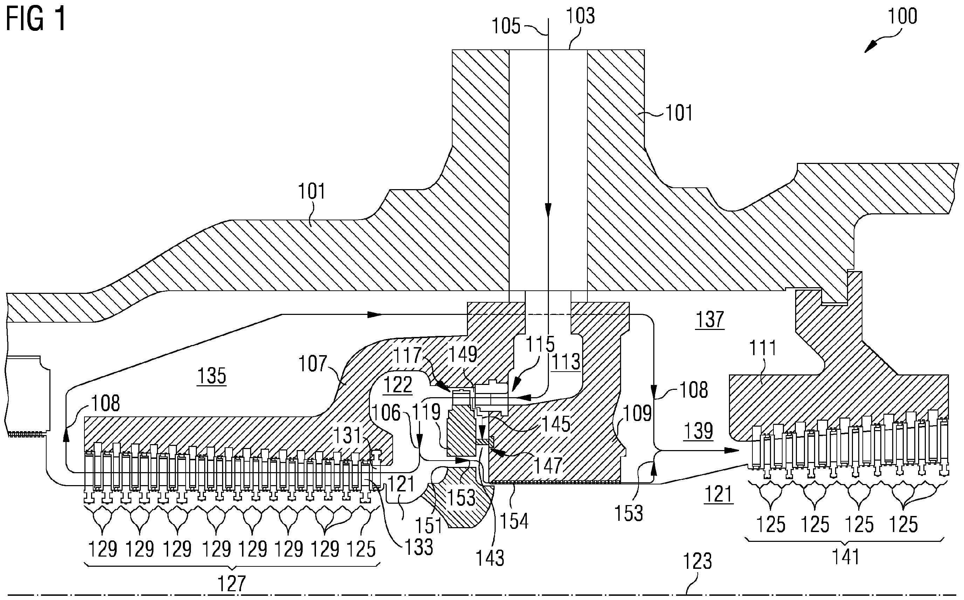

Der in Figur 1 in einem schematischen Längsschnitt illustrierte Teil einer Dampfturbine 100 umfasst ein Außengehäuse 101 mit einem Einströmkanal 103, in den heißer Dampf 105 (Frischdampf) in das Innere der Dampfturbine 100 eingeleitet werden kann. Das Innere der Dampfturbine 100 umfasst verschiedene Abschnitte 107, 109 und 111 einer oder mehrerer Baugruppen (111 wird als Leitschaufelträger bezeichnet), welche an dem Außengehäuse 101 durch nicht illustrierte Befestigungselemente fixiert sind. Die Abschnitte 107 und 109 werden im Rahmen dieser Anmeldung auch als Einströmgehäuse mit Trommelbeschaufelung bezeichnet.

Der Einführkanal 103 führt den Frischdampf 105 in einen im Einströmgehäuse befindlichen Düsenvorraum 113, von dem aus der Dampf 105 durch die Düsen 115 geleitet wird, um stromabwärts auf Radschaufeln 117 aufzutreffen, welche an einer Radscheibe 119 befestigt sind, welche wiederum mit einem Rotor 121 der Dampfturbine 100 verbunden ist.

Nach Antreiben der Radscheibe 119 durch Umströmung der Radschaufeln 117 gelangt der Dampf 106 in einen Raum stromabwärts der Radschaufeln 117, welcher auch als Radraum 122 bezeichnet wird. Der Rotor 121 rotiert während eines Betriebes der Dampfturbine 100 um eine Rotationsachse 123. Nachdem der Dampf 106 den Radraum 122 durchströmt hat, gelangt er auf eine erste Stufe 125 einer ersten Trommel 127. Die erste Trommel 127 umfasst neben der ersten Stufe 125 eine Mehrzahl von weiteren Stufen 129. Dabei ist jede Stufe 125, 129 durch an dem Abschnitt 107 des Einströmgehäuses angebrachte Leitschaufeln 131 und an dem Rotor 121 angebrachte Laufschaufeln 133 gebildet. Die jeweilig stromaufwärts von jeweiligen Laufschaufeln 133 angeordneten Leitschaufeln 131 lenken den Dampf 106 geeignet auf die stromabwärts liegenden Laufschaufeln 133 um, um eine Übertragung der Energie des Dampfes 106 in Rotationenergie des Rotors 121 zu bewirken.

Nach Durchströmung der ersten Trommel 127 der Dampfturbine 100 verlässt der nun weiter abgekühlte und in seinem Druck verminderte Dampf 108 die erste Trommel 127 in einem stromabwärts der ersten Trommel 127 in dem Strömungspfad des Dampfes 108 gelegenen Abschnitt 135 des Innenraums. In diesem Innenraum weist der Dampf 108 einen Druck p_nTr1 und eine Temperatur T_nTr1 auf. Dieser Druck und auch diese Temperatur sind kleiner als eine Temperatur T_nD und ein Druck p_nD unmittelbar stromabwärts der Düsenschaufeln 115.

In dem Raumabschnitt 135 des Innenraumes wird der abgekühlte Dampf 105 in einer Richtung entgegengesetzt zu einer Durchströmungsrichtung durch die erste Trommel 127 geführt und zu einem weiteren Abschnitt 137 des Innenraums der Dampfturbine 100 geleitet. Dieser Abschnitt 137 des Innenraumes ist in Kommunikation mit einem Dampfeintrittsraum 139 in eine zweite Trommel 141, welche ähnlich wie die erste Trommel 127 aufgebaut sein kann, jedoch ausgebildet ist, von Dampf in einer entgegengesetzten Richtung verglichen mit der Richtung, in welcher die erste Trommel 127 durchströmt wird, durchströmt zu werden. Auch die zweite Trommel 141 ist aus einer Mehrzahl von Stufen 125, 129 gebildet, wobei jede Stufe Leitschaufeln 131 und relativ dazu stromabwärts angeordnete Laufschaufeln 133 aufweist, wobei die Laufschaufeln 133 an dem Rotor 121 befestigt sind, während die Leitschaufeln 131 an einem Abschnitt 111 eines Leitschaufelträgers befestigt sind.

Die Dampfturbine 100 weist insbesondere den Einströmgehäuseabschnitt 109 des Einströmgehäuses auf, an dem die Düsenschaufeln 115 angebracht sind. Die relativ zu dem Einströmgehäuseabschnitt 109 zusammen mit dem Rotor 121 rotierbare Radscheibe 119 hat daran die Radschaufeln 117 befestigt. Dabei sind die Düsenschaufeln 115 ausgebildet und relativ zu den Radschaufeln 117 angeordnet, um eingeleiteten Dampf 105 auf die Radschaufeln 117 zu lenken. Ferner ist ein Spalt 143 zwischen dem Einströmgehäuseabschnitt 109 und der Radscheibe 119 gebildet, um somit ein freies Rotieren der Radscheibe 119 gegenüber dem feststehenden Einströmgehäuseabschnitt 109 zu ermöglichen.

In diesen Spalt 143 dringt ein Teil 145 des durch die Düsenschaufeln 115 hindurch tretenden bzw. abgelenkten Dampf 105 ein, der somit und unvorteilhafterweise nicht über die Radschaufeln 117 geleitet wird. Dieser Anteil 145 des Dampfes 105 stellt einen Leckstrom in konventionellen Dampfturbinen dar.

Um diesen Leckstrom 145 zu begrenzen und zu vermindern, umfasst die Dampfturbine 100 gemäß dieser Ausführungsform der vorliegenden Erfindung eine in einem Abschnitt des Spaltes 143 angeordnete Spaltdichtung 147, die an dem Einströmgehäuseabschnitt 109 oder an der Radscheibe 119 angebracht ist. Die Spaltdichtung 147 verschließt zumindest teilweise den Spalt 143 in dem Abschnitt, in dem die Spaltdichtung 147 angeordnet ist, gegen einen Durchtritt von Dampf 145, der aus einem Raumbereich 149 stromabwärts der Düsenschaufeln 115 und stromaufwärts der Radschaufeln 117 herrührt.

Die Spaltdichtung 147 ist umfangsmäßig vollständig umlaufend, um den Spalt 143, welcher eine Ringform aufweist, gegen Durchtritt von Dampf 145 (zumindest teilweise) zu verschließen. Die Spaltdichtung 147 kann insbesondere als eine Bürstendichtung mit Bürsten und einer Fassung ausgebildet sein, wobei die Fassung in eine Nut in dem Einströmgehäuseabschnitt 109 eingepresst sein kann.

Die Dampfturbine 100 weist ferner in der Radscheibe 119 eine im Wesentlichen axial (d.h. parallel zu der Drehachse 123) verlaufende Durchgangsöffnung 151 auf, welche radial (die radiale Richtung ist senkrecht zu der Drehachse 123) zwischen der Rotorachse 123 und der Spaltdichtung 127 angeordnet ist.

Die Durchgangsöffnung 151 ermöglicht, dass ein Teilstrom 153 des Dampfes 106 aus dem Radraum 122 durch die Radscheibe 119 hindurch zu einer Wellendichtung 154 geführt wird, welche zwischen dem Rotor 121 und dem Einströmgehäuseabschnitt 109 des Einströmgehäuses angeordnet ist. Der Teilstrom 153 des Dampfes hat einen Druck p_RR und eine Temperatur T_RR, welche kleiner sind als der Druck p_nD bzw. die Temperatur T_nD nach Durchlaufen der Düsenschaufeln 115 aber vor Durchlaufen der Radschaufeln 117, da der Dampf in dem Radraum 122 bereits einen Teil seiner Energie über die Radschaufeln 117 übertragen hat. Der Teilstrom 153 ist somit geeignet, den Bereich der Wellendichtung 154, welche insbesondere als eine Labyrinthdichtung ausgebildet sein kann, beim Durchströmen von einem Spaltende zu dem Dampfeintrittsraum 139 zur zweiten Trommel 141 hin zu kühlen. Der Teilstrom 153 vereinigt sich dann mit dem nach Durchlaufen der ersten Trommel 127 am Ende der ersten Trommel austretenden Strom 108, um in die zweite Trommel 141 einzutreten.

Der Dampfstrom nach Durchlaufen der Düsenschaufeln 115 und der Radschaufeln 117 ist mit Bezugszeichen 106 bezeichnet.

Wie in Figur 1 dargestellt ist, ist der Dampfeintrittsraum 139 zur zweiten Trommel 141 über die Wellendichtung 154 von dem Spalt 143 getrennt. Die Durchgangsöffnung 151 ermöglicht eine Dampfkommunikation zwischen einem näher als die Spaltdichtung an der Rotationsachse 123 gelegenen Abschnitt des Spaltes und dem Radraum 122, d.h. einem Raum stromabwärts der Radschaufeln 117.

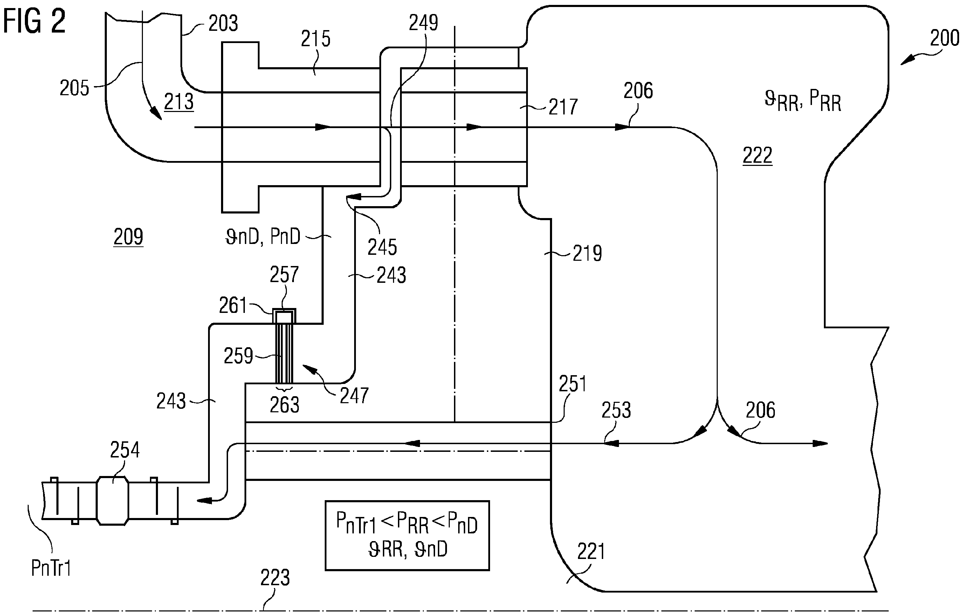

In der in Figur 1 illustrierten Ausführungsform ist der Spalt 143 durch die Spaltdichtung 147 in axialer Richtung verschlossen, d.h. die Spaltdichtung 147 verläuft in axialer Richtung. Je nach Geometrie des Spaltes 143 und auch je nach Geometrie der Einströmgehäuseabschnitte 109 und der Radscheibe 119 kann sich die Spaltdichtung 147 auch in anderen Richtungen, etwa radial erstrecken, wie in einer anderen Ausführungsform der vorliegenden Erfindung in Figur 2 illustriert ist.

Strukturen und Elemente, welche in Funktion und/oder Struktur ähnlich oder gleich sind, sind in den Figuren 1 und 2 mit Bezugszeichen bezeichnet, welche sich lediglich in der ersten Stelle unterscheiden.

Relativ zu der Orientierung der Dampfturbine in Figur 1 illustriert Figur 2 einen Teil einer Dampfturbine 200, deren Trommeln alle in der gleichen Richtung durchströmt werden.

Dampf 205 wird durch das Einströmrohr 203 den Düsenschaufeln 215 zugeleitet, welche den Dampf auf die Radschaufeln 217 umlenken, um die an den Radschaufeln 217 befestigte Radscheibe 219, welche mit dem Rotor 221 gekoppelt ist, in Rotation zu versetzten. Die Radscheibe 219 umfasst eine im Wesentlichen axial (parallel zu der Rotationsachse 223) verlaufende Durchgangsöffnung 251, welche einen Teilstrom 253 des Dampfstroms 206 durch die Durchgangsöffnung 251 zu der Wellendichtung 254 leitet, um diesen Bereich zu kühlen.

Der zwischen der Radscheibe 219 und dem Einströmgehäuseabschnitt 209 gebildete Spalt 243 ist durch die Bürstendichtung 247 zumindest teilweise verschlossen, um den Leckstrom 245 von Dampf, welcher aus dem Raumbereich 249 stromabwärts der Düsenschaufeln 215 und stromaufwärts der Radschaufeln 217 unerwünscht abzweigt, zu begrenzen. Der unerwünschte Teilstrom 245 ist somit zumindest teilweise an einem Vordringen bis zu der Wellendichtung 254 gehindert. Somit kann eine Aufheizung im Bereich der Wellendichtung 254 und aller nachfolgenden Bereiche durch den noch sehr heißen Dampfteilstrom 245 vermindert werden. Der Teilstrom 245 hat eine Temperatur T_nD und einen Druck p_nD. Dieser Temperatur und dieser Druck sind größer als der Druck p_RR und die Temperatur T_RR in dem Radraum 222, aus welchem der Teilstrom 253 herrührt. Somit ist der Teilstrom 253 des Dampfes zum Kühlen im Bereich der Wellendichtung 254 geeignet.

Der Strom 206 tritt in Figur 2 weiter rechts in eine nicht illustrierte erste Trommel ein und wird nach Durchlaufen der ersten Trommel NICHT um 180° abgelenkt und zurückgeführt, um links von der Wellendichtung 254 in Figur 2 in eine zweite Trommel einzutreten.

Die Bürstendichtung 247 weist eine Fassung 257 und Bürsten 259 auf.

Wie aus Figur 2 ersichtlich ist, verlaufen die Bürsten 259 in einer radialen Richtung und stehen in Kontakt mit einem gegenüberliegenden Oberflächenbereich 263 der Radscheibe 219. Dieser Oberflächenbereich 263 kann gemäß einer Ausführungsform eine Nut aufweisen, um eine Führung der Enden der bürsten 259 zu bewirken.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

## Patentansprüche

1. Dampfturbine (100, 200) mit einer Düsengruppenregelung einer Regelstufe, aufweisend:
einen Einströmgehäuseabschnitt (107, 109) eines Einströmgehäuses;
Düsenschaufeln (115) der Regelstufe, die an dem Einströmgehäuseabschnitt angebracht sind;
eine relativ zu dem Einströmgehäuseabschnitt (109) zusammen mit einem Rotor (1121) rotierbare Radscheibe (119) eines Regelrades mit Radschaufeln (117) der Regelstufe, wobei die Düsenschaufeln (115) ausgebildet und relativ zu den Radschaufeln (117) angeordnet sind, eingeleiteten Dampf (105) auf die Radschaufeln (117) zu lenken, wobei ein Spalt (143) zwischen dem Einströmgehäuseabschnitt (109) und der Radscheibe (119) gebildet ist;
eine in einem Abschnitt des Spaltes (143) angeordnete Spaltdichtung (147), die an dem Einströmgehäuseabschnitt (109) angebracht ist und als eine Bürstendichtung (247) ausgebildet ist, wobei die Bürstendichtung Bürsten (259) und eine Fassung (257) aufweist, in der die Bürsten verpresst sind; und
eine im Wesentlichen axial verlaufende Durchgangsöffnung (151) in der Radscheibe, welche radial zwischen einer Rotorachse (123) und der Spaltdichtung (147) angeordnet ist.

2. Dampfturbine gemäß Anspruch 1, wobei die Spaltdichtung (147) den Spalt (143) in dem Abschnitt gegen Durchtritt von Dampf (145), der aus einem Raumbereich (149) stromabwärts der Düsenschaufeln (115) und stromaufwärts der Radschaufeln (117) herrührt, teilweise verschließt,
wobei die Spaltdichtung insbesondere umfangsmäßig umlaufend ausgebildet ist.

3. Dampfturbine gemäß Anspruch 1 oder 2,
wobei die Fassung der Bürstendichtung insbesondere in eine Aussparung (161) in dem Einströmgehäuseabschnitt (109) eingepresst ist.

4. Dampfturbine gemäß einem der vorangehenden Ansprüche,
wobei die Bürstendichtung (147) radial und/oder axial ausgerichtete Bürsten (259) aufweist, welche mit einer der Fassung der Bürstendichtung gegenüberliegenden Oberfläche (263) der Radscheibe (219) in Kontakt stehen.

5. Dampfturbine gemäß einem der vorangehenden Ansprüche,
wobei die Durchgangsöffnung (151) angeordnet ist, um eine Dampf-Kommunikation zwischen einem anderen Abschnitt des Spalts (143), der von den Düsenschaufeln (115) aus jenseits der Spaltdichtung (147) liegt, und einem Raum (122) stromabwärts der Radschaufeln (117) zu ermöglichen.

6. Dampfturbine gemäß einem der vorangehenden Ansprüche,
wobei die Durchgangsöffnung (151)
als axial verlaufende Öffnung, insbesondere Bohrung, durch die Radscheibe (119) oder
als eine Öffnung oder ein Durchbruch geneigt um einen Winkel gegen die axiale Richtung durch die Radscheibe oder
als erodierte Öffnung durch die Radscheibe
ausgeführt ist.

7. Dampfturbine gemäß einem der vorangehenden Ansprüche, ferner aufweisend:
eine erste Trommel (127) mit einer Mehrzahl von Stufen (125, 129), wobei jede Stufe an einem Statorteil angebrachte Leitschaufeln (131) und an dem Rotor angebrachte Laufschaufeln (133) aufweist,
wobei die erste Trommel stromabwärts des Raumes stromabwärts der Radschaufeln angeordnet ist.

8. Dampfturbine gemäß dem vorangehenden Anspruch, ferner aufweisend:
zumindest eine zweite Trommel (141) mit einer Mehrzahl von Stufen (125, 129), wobei jede Stufe an dem Statorteil angebrachte Leitschaufeln und an dem Rotor angebrachte Laufschaufeln aufweist;
eine Wellendichtung (154), die insbesondere eine in axialer Richtung verlaufende Labyrinthdichtung umfasst und zwischen dem Rotor (121) und dem Einströmgehäuseabschnitt (109) des Einströmgehäuses angeordnet ist,
wobei die zweite Trommel (141) von Dampf gespeist wird, der aus der ersten Trommel (127) austritt und über eine Dampfführung in einen Dampfeintrittsraum zur zweiten Trommel zurückgeführt wird, wobei die zweite Trommel von dem Dampf in, verglichen mit der Richtung, in der die erste Trommel von dem Dampf durchströmt wird, umgekehrter Richtung durchströmt wird,
wobei der Dampfeintrittsraum (139) zur zweiten Trommel (141) über die Wellendichtung (154) von dem Spalt getrennt ist.

9. Dampfturbine gemäß einem der vorangehenden Ansprüche, wobei die Spaltdichtung (147) radial weiter von der Rotorachse (123) entfernt angeordnet ist als die Wellendichtung (154) und insbesondere ausgebildet ist, einen Strom von Dampf von dem Raumbereich (149) stromabwärts der Düsenschaufeln (115) und stromaufwärts der Radschaufeln (117) durch den Spalt (143) hindurch und zu der Wellendichtung hin zu vermindern.

10. Dampfturbine gemäß einem der vorangehenden Ansprüche, ferner aufweisend:
Regelorgane, die stromaufwärts der Düsenschaufeln angeordnet sind und erlauben, eine Dampfdurchtrittsrate durch die Düsenschaufeln in den Innenraum einzustellen,
wobei die Dampfturbine insbesondere ferner ein Außengehäuse aufweist, welches das Einströmgehäuse umgibt.

## Claims

1. Steam turbine (100, 200) with nozzle group control of a control stage, having:
an inflow housing portion (107, 109) of an inflow housing;
nozzle blades (115) of the control stage, which are attached to the inflow housing portion;
a wheel disc (119) of a control wheel, which can be rotated together with a rotor (1121) in relation to the inflow housing portion (109) and has wheel blades (117), of the control stage, wherein the nozzle blades (115) are formed and arranged in relation to the wheel blades (117) to direct introduced steam (105) onto the wheel blades (117), wherein a gap (143) is formed between the inflow housing portion (109) and the wheel disc (119);
a gap seal (147), which is arranged in a portion of the gap (143), is attached to the inflow housing portion (109) and is formed as a brush seal (247), wherein the brush seal has brushes (259) and a mount (257), in which the brushes are pressed; and
a substantially axially running passage opening (151) in the wheel disc, which is arranged radially between a rotor axis (123) and the gap seal (147).

2. Steam turbine according to Claim 1, wherein the gap seal (147) partially closes the gap (143) in the portion to prevent passing through of steam (145) that originates from a spatial area (149) downstream of the nozzle blades (115) and upstream of the wheel blades (117),
wherein the gap seal is in particular formed as running around circumferentially.

3. Steam turbine according to Claim 1 or 2,
wherein the mount of the brush seal is in particular press-fitted in a clearance (161) in the inflow housing portion (109).

4. Steam turbine according to one of the preceding claims,
wherein the brush seal (147) has radially and/or axially aligned brushes (259), which are in contact with a surface (263) of the wheel disc (219) that is opposite from the mount of the brush seal.

5. Steam turbine according to one of the preceding claims,
wherein the passage opening (151) is arranged to allow steam communication between another portion of the gap (143), which lies on the other side of the gap seal (147) from the nozzle blades (115), and a space (122) downstream of the wheel blades (117).

6. Steam turbine according to one of the preceding claims, wherein the passage opening (151) is configured as an axially running opening, in particular a bore, through the wheel disc (119) or as an opening or an aperture inclined by an angle with respect to the axial direction through the wheel disc or as an eroded opening through the wheel disc.

7. Steam turbine according to one of the preceding claims, also having:
a first drum (127) with a plurality of stages (125, 129), wherein each stage has stationary blades (131) attached to a stator part and moving blades (133) attached to the rotor,
wherein the first drum is arranged downstream of the space downstream of the wheel blades.

8. Steam turbine according to the preceding claim, also having:
at least one second drum (141) with a plurality of stages (125, 129), wherein each stage has stationary blades attached to the stator part and moving blades attached to the rotor;
a shaft seal (154), which comprises in particular a labyrinth seal running in the axial direction and is arranged between the rotor (121) and the inflow housing portion (109) of the inflow housing,
wherein the second drum (141) is fed by steam that leaves the first drum (127) and is returned by way of a steam guide into a steam inlet space to the second drum, wherein the second drum is flowed through by the steam in the reverse direction compared to the direction in which the first drum is flowed through by the steam,
wherein the steam inlet space (139) to the second drum (141) is separated from the gap by way of the shaft seal (154).

9. Steam turbine according to one of the preceding claims, wherein the gap seal (147) is arranged radially further away from the rotor axis (123) than the shaft seal (154) and in particular is formed to reduce a flow of steam from the spatial area (149) downstream of the nozzle blades (115) and upstream of the wheel blades (117) through the gap (143) and toward the shaft seal.

10. Steam turbine according to one of the preceding claims, also having:
control elements, which are arranged upstream of the nozzle blades and allow a rate at which the steam passes through the nozzle blades into the interior space to be set,
wherein the steam turbine also has in particular an outer housing, which surrounds the inflow housing.

## Revendications

1. Turbine à vapeur (100, 200) comportant un réglage de groupe de buses d'un étage de réglage, comprenant :
une section de carter d'admission (107, 109) d'un carter d'admission ;
des aubes de buse (115) de l'étage de réglage, qui sont fixées à la section de carter d'admission ;
un disque de roue (119) d'une roue de réglage comportant des aubes de roue (117) de l'étage de réglage, le disque de roue pouvant tourner avec un rotor (1121) par rapport à la section de carter d'admission (109), les aubes de buse (115) étant formées et agencées par rapport aux aubes de roue (117), de manière à diriger la vapeur introduite (105) sur les aubes de roue (117), un interstice (143) étant formé entre la section de carter d'admission (109) et le disque de roue (119) ;
une garniture d'étanchéité (147) qui est agencée dans une section de l'interstice (143), est fixée à la section de carter d'admission (109) et est formée comme un joint à brosse (247), le joint à brosse ayant des brosses (259) et une douille (257) dans laquelle les brosses sont pressées ; et
une ouverture traversante (151) ménagée dans le disque de roue et s'étendant essentiellement dans le sens axial, lequel disque de roue est agencé radialement entre un axe de rotor (123) et la garniture d'étanchéité (147).

2. Turbine à vapeur selon la revendication 1, dans laquelle la garniture d'étanchéité (147) ferme partiellement l'interstice (143) dans la section contre le passage de la vapeur (145) qui provient d'une zone d'espace (149) en aval des aubes de buse (115) et en amont des aubes de roue (117),
la garniture d'étanchéité étant formée en particulier circonférentiellement.

3. Turbine à vapeur selon la revendication 1 ou 2,
dans laquelle la douille du joint à brosse est enfoncée en particulier dans un évidement (161) dans la section de carter d'admission (109).

4. Turbine à vapeur selon l'une des revendications précédentes, dans laquelle le joint à brosse (147) comporte des brosses (259) orientées radialement et/ou axialement, qui sont en contact avec une surface (263) du disque de roue (219) opposée à la douille du joint à brosse.

5. Turbine à vapeur selon l'une des revendications précédentes, dans laquelle l'ouverture traversante (151) est agencée pour permettre la communication de vapeur entre une autre section de l'interstice (143) qui se trouve au-delà de la garniture d'étanchéité (147) à partir des aubes de buse (115), et un espace (122) en aval des aubes de roue (117).

6. Turbine à vapeur selon l'une des revendications précédentes, dans laquelle l'ouverture traversante (151) est conçue
comme une ouverture s'étendant axialement, en particulier un alésage, dans le disque de roue (119) ou
comme une ouverture ou une percée inclinée à un angle par rapport à la direction axiale dans le disque de roue ou
comme une ouverture érodée dans le disque de roue.

7. Turbine à vapeur selon l'une des revendications précédentes, comprenant en outre :
un premier tambour (127) comportant une pluralité d'étages (125, 129), chaque étage ayant des aubes directrices (131) fixées à une partie de stator et des aubes mobiles (133) fixées au rotor,
dans laquelle le premier tambour est agencé en aval de l'espace en aval des aubes de roue.

8. Turbine à vapeur selon la revendication précédente, comprenant en outre :
au moins un second tambour (141) comportant une pluralité d'étages (125, 129), chaque étage ayant des aubes directrices fixées à la partie de stator et des aubes mobiles fixées au rotor ;
un joint d'arbre (154) qui comprend en particulier un joint à labyrinthe s'étendant dans la direction axiale et est agencé entre le rotor (121) et la section de carter d'admission (109) du carter d'admission,
le second tambour (141) étant alimenté par de la vapeur qui sort du premier tambour (127) et est renvoyée vers le deuxième tambour par le biais d'un guide de vapeur dans un espace d'entrée de vapeur, le second tambour étant traversé par la vapeur dans la direction opposée à la direction dans laquelle le premier tambour est traversé par la vapeur,
l'espace d'entrée de vapeur (139) vers le second tambour (141) étant séparé de l'interstice par le joint d'arbre (154).

9. Turbine à vapeur selon l'une des revendications précédentes, dans laquelle la garniture d'étanchéité (147) est agencée radialement plus loin de l'axe du rotor (123) que le joint d'arbre (154) et, en particulier, est formée de manière à réduire un écoulement de vapeur partant de la zone spatiale (149) en aval des aubes de buse (115) et en amont des aubes de roue (117) et arrivant au joint d'arbre en traversant l'interstice (143).

10. Turbine à vapeur selon l'une des revendications précédentes, comprenant en outre :
des organes de réglage qui sont agencés en amont des aubes de buse et permettent de régler un débit de passage de vapeur à travers les aubes de buse dans l'espace intérieur,
la turbine à vapeur en particulier ayant en outre un carter externe qui entoure le carter d'admission.
